# EUROPÄISCHE PATENTANMELDUNG

(11) **EP 2 088 224 A1**
(43) Veröffentlichungstag der Anmeldung: **12.08.2009**
(21) Anmeldenummer: 08000412.0
(22) Anmeldetag: 10.01.2008
(51) Int. Cl.: C23C 28/00, C23C 24/04, C23C 4/12, C23C 4/08, F01D 5/28

(54) **Verfahren zur Herstellung einer rauen Schicht und ein Schichtsystem**

(71) Anmelder: SIEMENS AKTIENGESELLSCHAFT, 80333 München (DE)
(72) Erfinder: Wollnik, Adrian, 13585 Berlin (DE)

(57) **Zusammenfassung**

Schichten müssen oft eine bestimmte Rauhigkeit aufweisen, die sich jedoch nicht durch Einstellung einiger Parameter beim Beschichtungsverfahren erreicht werden können. Eine mechanische Aufrauung ist oft zu aufwändig.

Das erfindungsgemäße Verfahren schlägt vor, in einem letzten Beschichtungsschritt für eine Schicht (7) Partikel (13) mitzubeschichten, die nach der Beschichtung entfernt werden, um eine raue Schicht zu erzeugen.

## Beschreibung

Die Erfindung betrifft ein Verfahren zum Herstellen einer rauen Schicht auf einem Substrat und ein Schichtsystem.

Schichten werden aus verschiedenen Gründen auf Substraten aufgebracht. Dabei weist die Oberfläche der Schicht eine bestimmte Rauhigkeit auf. Je nach Funktion der Schicht ist eine geringe oder hohe Rauhigkeit gefordert.

So wird beispielsweise bei chemisch aktiven Oberflächen, also bei der Verwendung von Katalysatoren eine große Oberfläche gefordert. Ebenso wird bei Schichten, die als Haftvermittlerschicht für eine keramische Schicht, wie z.B. bei Turbinenschaufeln, verwendet werden, eine hohe Rauhigkeit gefordert, damit die keramische Schicht auf der unterliegenden Schicht gut haftet. Viele Beschichtungsverfahren ergeben jedoch eine zu glatte Oberfläche.

Es ist daher Aufgabe der Erfindung ein Verfahren und ein Schichtsystem aufzuzeigen, bei dem eine hinreichend raue Oberfläche erzeugt bzw. verwendet wird.

Die Aufgabe wird gelöst durch ein Verfahren gemäß Anspruch 1, und ein Schichtsystem nach Anspruch 12.

In den Unteransprüchen sind weitere vorteilhafte Maßnahmen aufgelistet, die beliebig miteinander kombiniert werden können, um weitere Vorteile zu erzielen.

### Es zeigen:

- Figur 1: schematisch den Ablauf des erfindungsgemäßen Verfahrens,
- Figur 2: eine Gasturbine,
- Figur 3: perspektivisch eine Turbinenschaufel,
- Figur 4: perspektivisch eine Brennkammer und
- Figur 5: eine Liste von Superlegierungen.

Die Figuren und die Beschreibung stellen nur Ausführungsbeispiele der Erfindung dar.

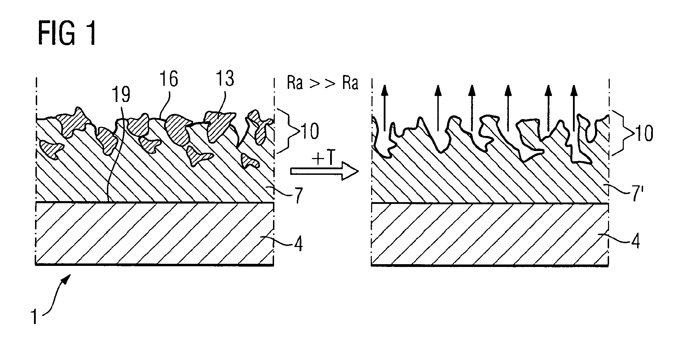

In Figur 1 ist schematisch der Ablauf des erfindungsgemäßen Verfahrens gezeigt.

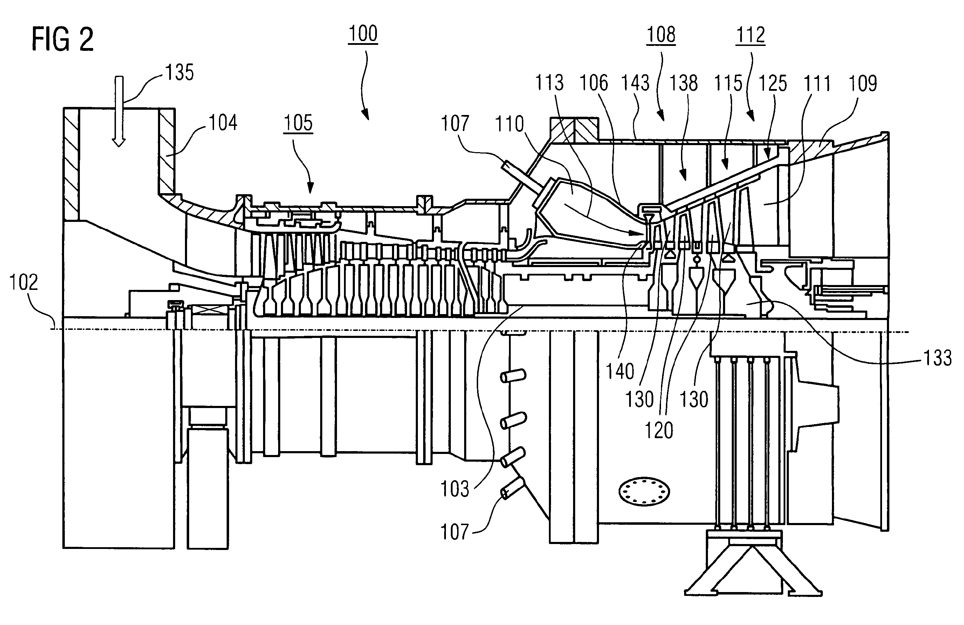

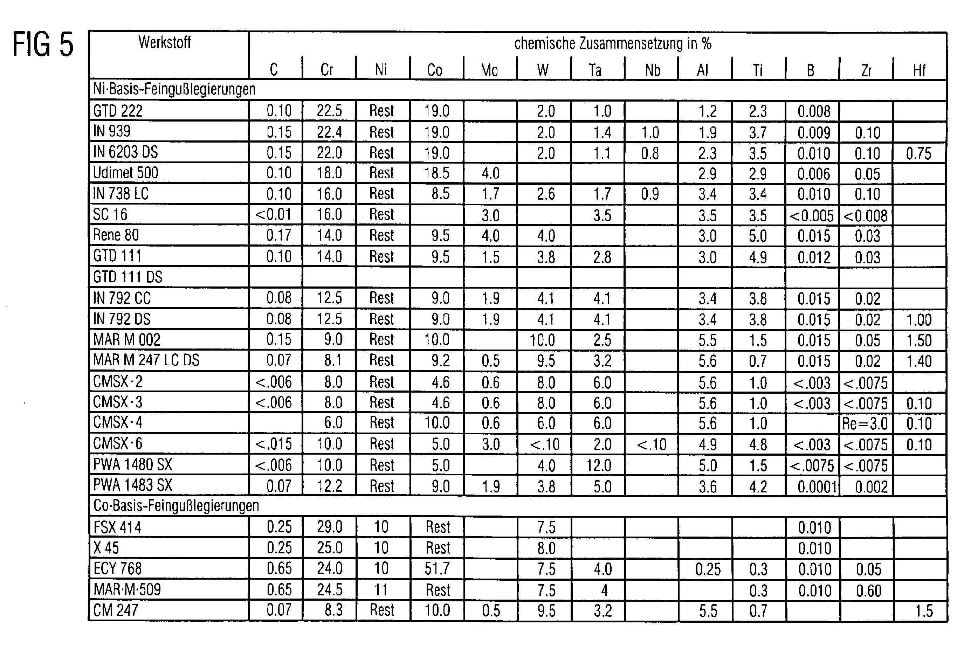

Ein Bauteil 1, 120, 130, 155 (Fig. 2, 3, 4) weist ein Substrat 4 auf.
Insbesondere bei der Verwendung im Hochtemperaturbereich weist das Substrat 4 eine Superlegierung gemäß Figur 5 auf.

Auf das Substrat 4 mit einer Oberfläche 19 wird eine Schicht 7 aus einem Beschichtungsmaterial aufgebracht.

Im Fall einer Turbinenschaufel 120, 130 stellt dies insbesondere eine metallische Anbindungsschicht, insbesondere aus einer MCrAlX-Legierung dar.
Die Schicht 7 wird wie im Stand der Technik in mehreren Lagen auf das Substrat 4 aufgebracht.

In einem ersten Schritt wird das Beschichtungsmaterial der Schicht als ein erster Teil der Schicht 7 auf die Oberfläche 19 des Substrats 4 aufgebracht. Der erste Teil der Schicht 7 ergibt vorzugsweise mindestens 50%, insbesondere 75% der Gesamtschichtdicke der Schicht 7.
In einem letzten Schritt, um den restlichen Teil der Schicht 7 zu erzeugen, wird ein anderes Pulver verwendet, nämlich das Beschichtungsmaterial der Schicht (7), dem Pulverpartikel 13 beigemengt sind.

Die Pulverpartikel 13 erstrecken sich nach der Beschichtung über eine äußere Oberfläche 16 der fertig gestellten Schicht 7 hinaus oder grenzen an die freie äußere Oberfläche 16 an. Sie 13 sind also nicht vollständig von dem Beschichtungsmaterial der Schicht 7 bedeckt. Dabei wird vorzugsweise eine Beschichtungslage 10 auf den bereits vorhandenen ersten Schichtanteil 7' aufgebracht.
Die MCrAlX-Schicht 7 wird also in zwei Schritten mit zwei verschiedenen Pulvern hergestellt.

Die Schicht 7 mit den Pulverpartikeln 13 weist einen geringen Rauhigkeitswert RA auf (Fig. 1 links).

Die chemische Zusammensetzung der Pulverpartikel 13 ist so ausgewählt, dass sie bei einem Spritzverfahren, vorzugsweise einem Niedertemperaturbeschichtungsverfahren, wie vorzugsweise dem HVOF-Verfahren nicht vollständig verdampfen oder sich nicht vollständig zersetzen. Bei einer dem Beschichtungsverfahren folgende Behandlung werden die Partikel 13 entfernt. Dies kann erfolgen durch Säure/Laugenbehandlung, durch Erwärmung (+T) oder sonstige Methoden.
Vorzugsweise werden die Partikel 13 verdampft.
Bei einer dem Beschichtungsverfahren nachfolgenden Temperaturbehandlung (+T) verdampfen die Partikel 13 (durch Pfeile angedeutet), nicht aber das Beschichtungsmaterial der Schicht 7. Die Schicht 7 wird also auf eine Temperatur erwärmt, die höher ist als die Verdampfungstemperatur der Partikel 13.

Vorzugsweise können die Partikel 13 in der Schicht 7 auch nur aufgeschmolzen werden, und die Schmelze wird heraus laufen gelassen oder wird aufgesaugt.

So können also Polymerpartikel verwendet werden oder Metalle, die vorzugsweise einen Bestandteil der Legierung der Schicht 7 darstellen und einen niedrigeren Schmelzpunkt als die Legierung der Schicht 7 aufweisen.

Im Falle einer MCrAlX-Legierung stellt dies vorzugsweise Aluminium dar.

Ebenso kann es hier dazu führen, dass beim Beschichten oder bei der Temperaturbehandlung Aluminium in die Schicht 7 hineindiffundiert, was jedoch überhaupt keine Rolle spielt, da das Aluminium dann auch als Reservoir für die sich bildende Oxidschicht umwandeln kann.
So werden Verunreinigungen vermieden.

So wird dann gemäß Figur 1 rechts beim Verdampfen (+T) der Aluminiumpartikel 13 eine Oberfläche erzeugt, die rauer ist als ein Figur 1 links, da die Partikel offene Poren und/oder Klafften hinterlassen.

Vorzugsweise wird der letzte Schichtbereich, also wenn die Partikel 13 mitbeschichtet werden, vorzugsweise die letzte Lage bei der Beschichtung unter einem Beschichtungswinkel von 90° bis 45°, insbesondere 70° bis 45° und ganz insbesondere bei 45° durchgeführt.

Vorzugsweise wird eine Körnung zwischen 11µm bis 125µm für das Beschichtungsmaterial, insbesondere das MCrAlX-Pulver verwendet.
Die Pulverpartikel 13 weisen vorzugsweise einen Schmelzpunktbereich bis 800°C auf und haben einen Anteil vorzugsweise von 2vol% bis 40vol%, insbesondere 5vol% bis 30vol% und weisen vorzugsweise eine Körnung von 20µm bis 150µm auf.

Vorzugsweise werden Niedrigtemperaturbeschichtungsverfahren wie das HVOF-Verfahren oder das Kaltgasspritzenverfahren verwendet, damit die Partikel 13 nicht aufschmelzen.

Im Falle vom Aluminium ist darauf zu achten, dass die Wärmebehandlung vorzugsweise im Hochvakuum (≤ 0,3 Pa) bei einer Temperatur von mindestens 1080°C und möglichst langen Aufheizzeiten durchgeführt wird, um eine vollständige Verdampfung von Aluminium zu ermöglichen.

Die Figur 2 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

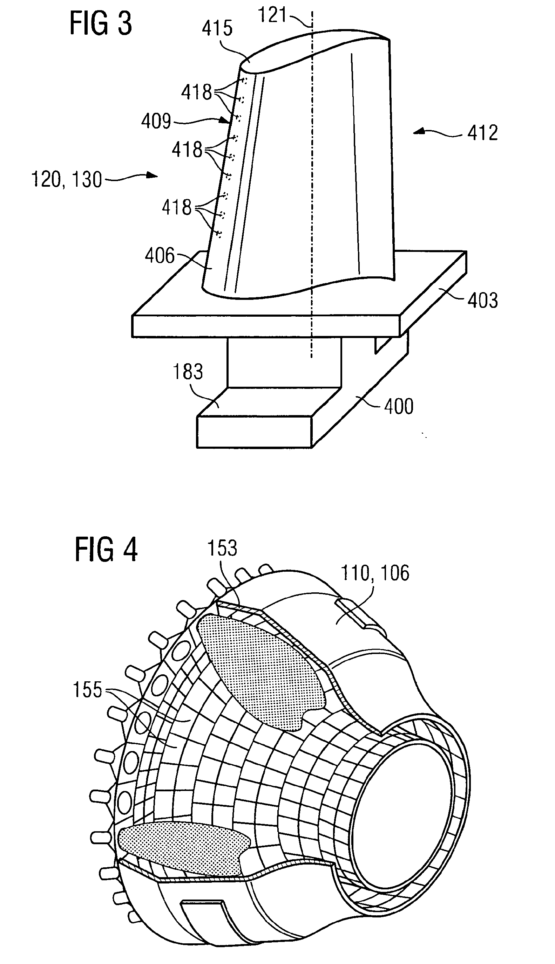

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 4 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zur Herstellung einer rauen Schicht (7) aus einem Beschichtungsmaterial,
wobei in einem ersten Schritt ein erster Teil der Schicht (7) aus dem Beschichtungsmaterial für die Schicht (7) aufgebracht wird,
wobei in einem letzten Schritt des Beschichtungsverfahrens ein Gemisch aus dem gleichen Beschichtungsmaterial der Schicht (7) und Partikeln (13) verwendet wird,
wobei die Partikel (13) einen geringeren Schmelzpunkt aufweisen als das Beschichtungsmaterial der Schicht (7) und
wobei die Partikel (13) beim Beschichten nicht vollständig verdampfen oder
sich nicht vollständig zersetzen und
wobei nach dem Beschichtungsverfahren die Schicht (7) aus dem Beschichtungsmaterial und den Partikeln (13) behandelt wird,
insbesondere erwärmt wird,
um Partikel (13) zu entfernen,
damit eine raue Schicht (7') zu erzeugt wird.

2. Verfahren nach Anspruch 1,
bei dem das Beschichtungsmaterial der Schicht (7) ein Metall aufweist,
insbesondere eine MCrAlX-Legierung aufweist,
ganz insbesondere aus einer MCrAlX Legierung besteht.

3. Verfahren nach Anspruch 1 oder 2,
bei dem die Partikel (13) aus Metall bestehen,
wobei insbesondere das Metall der Partikel (13) ein Legierungsbestandteil des Beschichtungsmaterials der Schicht (7) darstellt.

4. Verfahren nach Anspruch 1, 2 oder 3,
bei dem die Partikel (13) Aluminium aufweisen,
insbesondere daraus bestehen.

5. Verfahren nach Anspruch 1 oder 2,
bei dem die Partikel (13) ein Polymer oder Monomer oder ein Gemisch daraus aufweisen,
insbesondere darauf bestehen.

6. Verfahren nach Anspruch 1, 2, 3, 4 oder 5,
bei dem zumindest die letzte Lage aus dem Beschichtungsmaterial der Schicht (7) mit den Partikeln (13) unter einem Beschichtungswinkel von 90° bis 45°,
insbesondere 60° bis 45°,
ganz insbesondere bei 45°,
durchgeführt wird.

7. Verfahren nach Anspruch 1 oder 6,
das ein Niedertemperaturbeschichtungsverfahren ist, insbesondere ein HVOF oder Kaltgasspritzverfahren ist.

8. Verfahren nach Anspruch 1,
das bei einem mehrlagig aufgebrachten Schichten (7) verwendet wird.

9. Verfahren nach Anspruch 1 oder 8,
bei dem eine keramische Schicht auf die raue Schicht (7') aufgebracht wird,
insbesondere durch Plasmaspritzen,
ganz insbesondere durch APS, VPS, LPPS.

10. Verfahren nach Anspruch 1,
bei dem der erste Teil der Schicht (7) ohne Partikel (13) mindestens 50%,
insbesondere mindestens 75% der Schichtdicke der Schicht (7) darstellt.

11. Verfahren nach Anspruch 1,
bei dem der Anteil der Pulverpartikel (13) 2vol% bis 40vol%,
insbesondere 5vol% bis 30vol% beträgt.

12. Schichtsystem hergestellt nach einem oder mehreren der Ansprüche 1 bis 11.
